(19) Europäisches Patentamt
European Patent Office
Office européen des brevets

(11) **EP 2 489 836 A1**

(12) **EUROPÄISCHE PATENTANMELDUNG**

(43) Veröffentlichungstag:
**22.08.2012  Patentblatt 2012/34**

(51) Int Cl.:
**F01D 5/18** *(2006.01)*

(21) Anmeldenummer: **11001390.1**

(22) Anmeldetag: **21.02.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Karlsruher Institut für Technologie 76131 Karlsruhe (DE)**

(72) Erfinder:
• **Lorenz, Marco**
  **76135 Karlsruhe (DE)**
• **Horbach, Tim**
  **76131 Karlsruhe (DE)**

(74) Vertreter: **Wolf, Michael et al**
  **Wolf & Wolf**
  **Hirschstrasse 7**
  **63450 Hanau (DE)**

(54) **Kühlbares Bauteil**

(57)    Die Erfindung betrifft ein kühlbares Bauteil, umfassend eine zu kühlende Oberfläche (1), der Austrittsöffnungen (2) für ein Kühlmedium zugeordnet sind, das nach Austritt aus den Austrittsöffnungen (2) zur Ausbildung eines Kühlfilms auf der Oberfläche (1) vorgesehen ist, wobei in Hauptströmungsrichtung des Kühlmediums gesehen nach den Austrittsöffnungen (2) auf der Oberfläche (1) Unebenheitselemente (3) angeordnet sind. Nach der Erfindung ist vorgesehen, dass die Unebenheitselemente (3) auf der zu kühlenden Oberfläche (1) zur Erhöhung des turbulenten Queraustausches im wandnahen Bereich des Kühlfilms mehrreihig in regelmäßiger oder unregelmäßiger Anordnung ausgebildet sind.

Figur 1

EP 2 489 836 A1

**Beschreibung**

Die Erfindung betrifft ein kühlbares Bauteil gemäß dem Oberbegriff des Patentanspruchs 1.

Die Erfindung ist auf dem Gebiet der Filmkühlung thermisch hoch belasteter Bauteile, wie sie insbesondere in Gasturbinen vorkommen, angesiedelt. Dabei schützt ein Kühlfilm das zu kühlende Bauteil vor dem Heißgas. Bei der überwiegenden Mehrheit der zu kühlenden Bauteile ist die Oberfläche des zu kühlenden Bauteils kälter als das Fluid des Kühlfilms. In diesen Fällen ist es erstrebenswert, den Wärmeeintrag in das Bauteil zu reduzieren. Dies wird erreicht durch einen stabilen Kühlfilm und niedrige wärmeübergangskoeffizieaten im Wandbereich. Zahlreiche Patent und wissenschaftliche Arbeiten befassen sich mit dieser Problematik. - In sonderfällen jedoch, in denen die Oberflächentemperatur des zu kühlenden Bauteils höher ist als die des Kühlfilme, ist es erstrebenswert, bei einem stabilen Kühlfilm den wandnahen Wärmeübergang zu erhöhen, um dem Bauteil möglichst viel Wärme zu entziehen. Dies ist der Gegenstand dieser Erfindung.

Ein kühlbares Bauteil der eingangs genannten Art ist nach der DR 10 2009 003 634 A1 bekannt. Dieses besteht aus einer zu kühlenden Oberfläche, der Austrittsöffnungen für ein Kühlmedium zugeordnet sind, das nach Austritt aus den Austrittsöffnungen zur Ausbildung eines Kühlfilms auf der Oberfläche vorgesehen ist, wobei in Hauptströmungsrichtung des Kühlmediums gesehen nach den Austrittsöffnungen auf der Oberfläche Unebenheitselemente (Stromablenkeinrichtungen) angeordnet sind. Die Verwendung der Stromablenkeinrichtungen soll dabei bewirken, dass sich der Kühlfilm bzw. Kühlstrom gleichmäßig über einer größeren Abschnitt der Oberfläche (hier: eines Turbinenschaufelblatts) verteilt, se dass auf diese Weise eine effektive Kühlung des Turbinenschaufelblatts erzielt wird.

Der Erfindung liegt die Aufgabe zugrunde, die Kühlung eines zu kühlenden Bauteils weiter zu verbessern.

Diese Aufgabe ist mit einem kühlbaren Bauteil der eingangs genannten Art durch die im Kennzeichen des Patentanspruchs 1 aufgeführten Merkmale gelöst.

Nach der Erfindung ist also vorgesehen, dass die Unebenheitselemente auf der zu kühlenden Oberfläche zur Erhöhung des turbulenten Queraustausches im wandnahen Bereich des Kühlfilms mehrreihig und zwar wahlweise in regelmäßiger oder unregelmäßiger Anordnung ausgebildet sind.

Mit anderen Worten zeichnet sich die erfindungsgemäße Lösung dadurch aus, dass die Unebenheitselemente oder auch Rauigkeitselemente nicht nur - wie beim Stand der Technik - in Form einer Reihe, sondern mehrreihig (und zwar sowohl strukturiert als auch stochastisch verteilt, mithin unstrukturiert) nach den Austrittsöffnungen angeordnet sind.

Diese Mehrreihigkeit läuft dabei dem Lösungsansatz gemäß dem zitierten Stand der Technik insofern entgegen, als dort die Unebenheitselemente, wie eingangs erwähnt, ausschließlich dazu dienen, den Kühlstrom bzw. Kühlfilm gleichmäßig auf einen größeren Abschnitt des Turbinenschaufelblatts zu verteilen. Die Erfindung verfolgt demgegenüber ein anderes Ziel, nämlich den Wärmeübergang von der zu kühlenden Oberfläche auf das Kühlmedium zu verbessern (wobei die zu kühlende Oberfläche eine höhere Temperatur als das Kühlmedium aufweist), und zwar abgekoppelt von der Beeinflussung der Filmkühleffektivität durch die geometrische Gestalt der Austrittsöffnung bzw. etwaiger spezieller Geometrien (in Hauptströmungsrichtung des Kühlmediums gesehen) vor den Austrittsöffnungen, worauf weiter unten noch genauer eingegangen wird, auch wenn es auf diese internen Geometrien für die erfindungsgemäße Lösung nicht ankommt.

Andere vorteilhafte Weiterbildungen des erfindungsgemäßen kühlbaren Bauteils ergeben sich aus den abhängigen Patentansprüchen.

Der Vollständigkeit halber wird noch auf folgenden, weiter abliegenden Stand der Technik hingewiesen:

Aus der DE 32 00 972 A1 ist ein Brennereinsatz für ein Gasturbinentriebwerk bekannt. Bei dieser Lösung ist in Hauptströmungsrichtung des Kühlmediums gesehen vor der Austrittsöffnung eine Rippe zur Umlenkung des .Kühlmediums vorgesehen. Die Oberfläche nach der Austrittsöffnung ist bei dieser Lösung glatt ausgebildet.

Aus der DE 197 37 845 C2 ist ein Verfahren zur Herstellung einer Gasturbinenschaufel bekannt. Bei dieser Lösung sind im Innern einer oberflächenochicht Erhebungen vorgesehen, die zur Umlenkung des Kühlmediums vor dessen Austritt auf die zu kühlende Oberfläche dienen.

Aus der DE 101 43 153 A1 ist eine Turbinenschaufel bekannt, bei der eine Mündungsöffnung mit einem Wulst versehen ist. Hierdurch soll es möglich sein, die Kühlströmung direkt nach Verlassen der Mündungsöffnung an die Oberfläche der Turbine anzulegen.

Aus der DE 102 48 548 A1 ist ein kühlbares Bauteil bekannt, bei dem Unebenheitselemente innerhalb von Kühlkanälen von Turbinenschaufel angeordnet sind.

Aus der WO 2009/150019 A1 ist schließlich eine Schaufel für eine Gasturbine bekannt, bei der innere Kühlkanäle zur Verbesserung des wärmeübergangs von der Wand auf die Kühlluft mit Turbulatoren bzw. Pins versehen sind.

Schließlich wird noch auf die US 4,297,077 A, EP 0 185 599 A1, EP 1 057 971 A1 und US 6,514,042 B2 hingewiesen. Auch aus diesen Dokumenten sind Konstruktionen zur Kühlung von Turbinenschaufeln bekannt.

Das kühlbare Bauteil einschließlich seiner vorteilhaften weiterbildungen gemäß der abhängigen Patentansprüche wird nachfolgend anhand der zeichnerischen Darstellung verschiedener Ausführungsbeispiele näher erläutert.

Es zeigt

Figur 1    schematisch und im Schnitt die zurückgeschnittene Hinterkante einer Gasturbinenschaufel mit den erfindungsgemäßen Unebenheitselementen;

Figur 2    schematisch und im Schnitt die zurückgeschnittene Hinterkante einer Gasturbinenschaufel ohne die erfindungsgemäßen Unebenheiteelemente (Stand der Technik);

Figur 3    schematisch und im Schnitt die Hinterkante einer Gasturbinenschaufel mit einem Vergleich der Temperaturprofile mit den bzw. und ohne die erfindungsgemäßen Unetbenheitselemente;

Figur 4    perspektivisch und teilweise geschnitten eine Gasturbinenechaufel nach dem Stand der Technik (Quelle: Rolls-Royce);

Figur 5    schematisch und perspektivisch eine mögliche Ausführungsform der erfindungsgemäßen Unebenheitselemente,

Figur 6    schematisch und perspektivisch eine weitere mögliche Ausführungsform der erfindungsgemäßen Unebenheitselemente;

Figur 7    teilweise geschnitten eine Gasturbinenschaufel, bei der die Unebenheitselemente auf der Druckseite angeordnet sind;

Figur 8    im Schnitt eine Brennkammer einer Gasturbine nach dem Stand der Technik (Quelle: Rolls-Royce), bei der eine Brennkammerechindel mit den erfindungsgemäßen Unebenheitselementen versehen ist: und

Figur 9    im Schnitt und von oben insgesamt acht verschiedene Ausführungsbeispiele von Unebenheitselementen.

Wie bereits erwähnt, ist die Erfindung auf dem Gebiet der Filmkühlung thermisch hochbelasteter Bauteile, wie sie insbesondere in Gasturbinen vorkommen, angesiedelt. Gasturbinen werden vor allem als Flugtriebwerk und als stationäre Gasturbinen zur Energieerzeugung in Kraftwerken verwendet. Um höchste Prozesswirkungsgrade zu erzielen, wird die Prozesstemperatur (sowie das Druckverhältnis) dieser Maschinen immer weiter gesteigert. Schon heute liegen die Heißgastemperaturen am Eintritt der Turbine weit oberhalb des Schmelzpunktes der Materialien, die für die Turbinenbeschaufelung verwendet werden. Gleiches gilt für andere thermisch hochbelastete Komponenten, insbesondere Brennkammerwände. Die Entwicklung neuer Werkstoffe konnte dieses Problem in den vergangenen Jahren nicht lösen. Aus diesem Grund müssen im Heißgaspfad befindliche Bauteile aktiv gekühlt werden. Hierzu wird dem Prozess Luft aus dem Verdichter entnommen, die nicht an der Verbrennung teilnimmt und stattdessen für die Kühlung der thermisch hoch belasteten Bauteile verwendet wird. Ein exzessiver verbrauch an Kühlluft macht den durch höhere prozesstemperaturen erzielten Wirkungsgradgewinn jedoch wieder zunichte. Aus diesem Grund ist eine effiziente Nutzung der Kühlluft unbedingt erforderlich.

In der Praxis wird die Kühlluft bei solchen Anwendungen zunächst durch das Innere der zu kühlenden Bauteile geleitet, um diese konvektiv zu kühlen. Für eine hocheffiziente Nutzung der Kühlluft wird diese anschließend durch Filmkühlbohrungen ausgeblasen und gelangt so auf die Außenseite des zu kühlenden Bauteils. Dort bildet sich ein Kühlfilm mit geringerer Fluidtemperatur, der die Schaufeloberfläche schützt, indem der direkte Kontakt der heißen Hauptströmung mit der Schaufeloberfläche verhindert wird. Ist die Fluidtemperatur (Kühlfilmtemperatur) geringer als die Oberflächentemperatur des zu kühlenden Bauteils, entzieht der Kühlfilm dem Bauteil zusätzlich wärme. Dies ist insbesondere bei Bauteilen der Fall, die nicht ausreichend durch interne Kühlkanäle gekühlt werden können (zum Beispiel Schaufelhinterkanten) oder massiver Wärmestrahlung ausgesetzt sind (zum Beispiel Brennkammerwände).

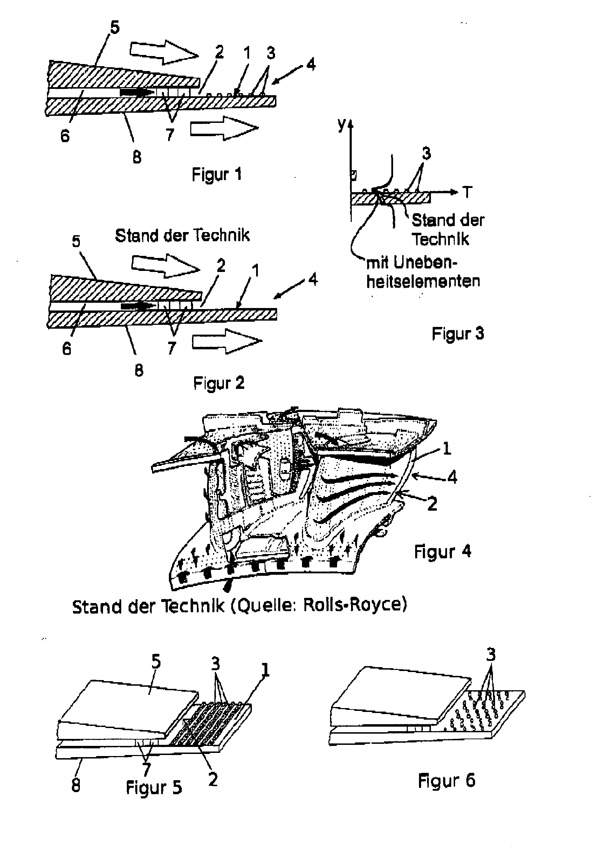

Ein konkretes Beispiel hierfür ist die Ausblasung von Kühlluft zur Kühlung der Hinterkante einer Turbinenschaufel (siehe hierzu Figur 4 [Stand der Technik!]): Kühlluft gelangt durch das Innere der Schaufel, wo die konvektive Kühlwirkung durch so genannte Turbulatoren gesteigert wird, an der zurückgeschnittenen Hinterkante auf die Außenseite der Schaufel. Dort etabliert sich ein Kühlfilm, der der Hinterkante Wärme entzieht und sie auf diese Weise kühlt - siehe hierzu auch Figur 2.

Als Maß für die Stabilität dieses Kühlfilms wird die Wandtemperatur betrachtet, die sich bei einer adiabaten Wand (keine Wärmeleitung in der wand) einstellt. Ist der Kühlfilm stabil, lässt sich die adiabate Wandtemperatur weit absenken, wohingegen bei einer starken Durchmischung der Kühlluft mit dem Heißgas höhere adiabate wandtemperaturen auftreten und damit eine schlechtere Effektivität des Kühlfilms. Die adiabate Wandtemperatur lässt sich in dimensionsloser Form als Filmkühleffektivität $\eta$ beschreiben:

$$\eta = \frac{T_{Heißgas} - T_{adiabateWand}}{T_{Heißgas} - T_{Kühlluft}}$$

Im realen Fall besitzt das Material des zu kühlenden Bauteils jedoch eine endliche Wärmeleitfähigkeit und es fließt ein wärmestrom aus dem zu kühlenden Bauteil in das Fluid des Kühlfilms:

$$\dot{q} = \alpha \left( T_{adiabate\,Wand} - T_{Wand} \right)$$

bzw.

$$\dot{q} = \alpha \left( T_{Hei\beta gas} - \eta \left( T_{Hei\beta gas} - T_{K\ddot{u}hlluft} \right) - T_{Wand} \right)$$

Hierbei ist a der Wärmeübergangskoeffizient der konvektiven Wärmeübertragung zwischen der zu kühlenden Wand und dem Kühlfilm. Die Kühlung ist umso effizienter je größer der Betrag des abgeführten Wärmestroms ist. Das negative Vorzeichen zeigt die Richtung des Wärmestroms an: Dem zu kühlenden Bauteil wird Wärme entzogen. Der abgeführte Wärmestrom wächst mit zunehmender Filmkühleffektivität η und zunehmendem Wärmeübergangskoeffizient α.

Mit verschiedenen internen Geometrien (zum Beispiel Turbulatoren) lassen sich Filmkühleffektivität und Wärmeübergangskoeffizient beeinflussen (Stand der Technik). Jedoch zeigen zahlreiche Untersuchungen, dass diese Beeinflussung nicht unabhängig voneinander stattfindet: Bei internen Turbulatoren mit einer Ausgestaltung, die eine vergleichsweise geringe Ausmischung des Kühlfilms mit dem Heißgas und damit eine hohe Filmkühleffektivität bewirken, zeigen sich niedrige Wärmeübergangskoeffizienten und umgekehrt. Bislang wurde also keine Möglichkeit gefunden, sowohl die Filmkühleffektivität als auch den Wärmeübergangskoeffizienten zu erhöhen, um damit den Gesamtwärmestrom deutlich zu steigern.

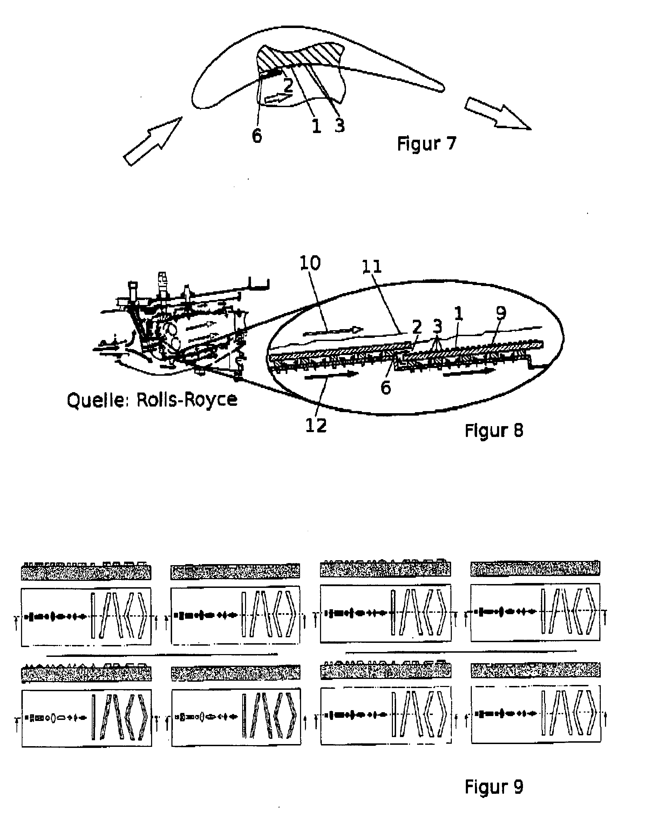

Die Erfindung löst dieses Problem und ermöglicht eine Steigerung des Wärmeübergangskoeffizienten unabhängig von der Filmkühleffektivität. Die Erfindung beschränkt sich dabei ausdrücklich nicht auf filmgekühlte Hinterkanten, sondern kann in allen Fällen angewandt werden, in denen eine Steigerung des Wärmeübergangs zwischen Kühlfilm und zu kühlendem Bauteil erwünscht ist (Filmkühlung von Brennkammerwänden bzw. Brennkammerschindeln 9 (siehe Figur 8),. Filmkühlung von Druckseiten auf Turbinenschaufeln (siehe Figur 7) direkt stromab von Brennkammern, die hoher Wärmestrahlung ausgesetzt sind etc.).

Die Erfindung wird nachfolgend am Beispiel einer zurückgeschnittenen Hinterkante einer Turbinenschaufel näher erläutert. In den Figuren 1, 3, 5 und 6 ist dementsprechend ein kühlbares Bauteil, nämlich die besagte Hinterkante, dargestellt, die eine zu kühlende Oberfläche 1 (Teil einer Gasturbine, insbesondere Hinterkante einer Gasturbinenschaufel) aufweist, der mindestens eine (gegebenenfalls auch mehrere) Austrittsöffnung 2 für ein Kühlmedium (typischerweise Luft) zugeordnet ist, das nach Austritt aus der Austrittsöffnung 2 zur Ausbildung eines Kühlfilms auf der Oberfläche 1 vorgesehen ist, wobei in Hauptströmungsrichtung des Kühlmediums gesehen nach der Austrittsöffnung 2 auf der Oberfläche 1 Unebenheitselemente 3 angeordnet sind (und wobei die Oberfläche 1 stets eine höhere Temperatur als der Kühlfilm aufweist).

Wesentlich für die erfindungsgemäße Lösung ist nun, dass die Unebenheitselemente 3 auf der zu kühlenden Oberfläche 1 zur Erhöhung des turbulenten Queraustausches im wandnahen Bereich des Kühlfilms mehrreihig bzw. flächig ausgebildet sind. Auf diese Weise ist es möglich die Filmkühleffektivität und den Wärmeübergangskoeffizienten unabhängig voneinander zu beeinflussen: während bei etwaig verwendeten internen Turbulatoren, auf die nachfolgend noch genauer eingegangen wird, Geometrien benutzt werden können, die zu einer hohen Filmkühleffektivität führen, wird der Wärmeübergangskoeffizient (der bei hcher Filmkühleffektivität vergleichsweise klein ausfällt) durch Oberflächenrauhigkeiten (Unebenheitselemente) drastisch erhöht. Noch etwas genauer betrachtet, wird bei der erfindungsgemäßen Lösung der Wärmeübergang gesteigert, indem durch Oberflächenrauhigkeiten lediglich in den wandnahen Bereichen die Durchmischung des Kühlfilms (Erhöhung des turbulenten Queraustausches) und damit der Wärmeübergang angefacht wird. Dabei weisen die Unebenheitselemente 3 bevorzugt eine Höhe auf, die maximal 50%, vorzugsweise 2 bis 5%, einer Höhe des Kühlfilms entspricht. Auf diese Weise wird die Kühlwirkung der eingesetzten Kühlluft deutlich erhöht, was zu höheren zulässigen Heißgastemperaturen oder geringerem Kühlluftbedarf führt. Beides erhöht den Gesamtwirkungsgrad der Gasturbine,

Figur 3 zeigt die entsprechenden Temperaturverläufe mit und ohne die erfindungsgemäßen Oberflächenrauhigkeiten. Dabei stellt die horizontale Achse ein Maß für die lokale Temperatur T dar (nach rechte zunehmend): Ohne Unebenheitaelemente ergibt sich im Material der Hinterkante der rechte Temperaturverlauf und mit den Unebenheitselemeaten der linke Temperaturverlauf, also derjenige, bei dem im Material unterhalb der Oberflächenrauhigkeiten insgesamt eine niedrigere Temperatur herrscht.

Betrachtet man die Ausführungsbeispiele gemäß den Figuren 1, 3, 5 und 6 genauer, so ist vorgesehen, dass die Hinterkante 4 der Gasturbinenschaufel druckseitig verkürzt (zurückgeschnitten) ausgebildet ist, wobei die Unebenheitselemente 3 auf einer einer Druckseite 5 der Gasturbinensehaufel zugewandten, unverkürzten Seite der Hinterkante 4 angeordnet sind. Außerdem ist die Austrittsöffnung 2 zwischen einer Druck- 5 und einer Saugseite 8 der Hinterkante

4 der Gasturbinenschaufel angeordnet, wobei eine Hauptquerschnittsebene der Austrittsöffnung 2 senkrecht zur Oberfläche 1 angeordnet und eine Höhe des. Kühlfilms durch die Höhe der Austrittsöffnung 2 definiert ausgebildet ist (eine Strömumg in einer solchen Geometrie nennt man auch tangentiale Spaltausblasung).

Außerdem können - wie in den Figuren 1, 3, 5 und 6 dargestellt - wie bei der bekannten Lösung gemäß Figur 2 in Hauptströmungsrichtung des Kühlmediums gesehen vor der Austrittsöffnung 2 in einem Kanal 6 im Innern der Gasturbinenschaufel Turbulatoren 7 für das Kühlmedium angeordnet sein.

Wie schließlich aus den Figuren 5, 6 und 9 ersichtlich, können die Unebenheitselemente 3 zur Erhöhung des turbulenten Queraustausches innerhalb des Kühlmediums in ihrer horizontalen Erstreckungsrichtung (also parallel zum Kühlfilm) sehr unterschiedlich ausgebildes sein, und zwar zum Beispiel in Form von vorzugsweise quer zur Hauptströmungsrichtung des Kühlmediums orientierten Rippen (siehe Figur 5), als erhabene Elemente (siehe Figur 6), als Ausbuchtungen (nicht extra dargestellt), als stochastische Rauhigkeiten etwa durch Strahlgut erzeugt (nicht extra dargestellt) oder dergleichen (siehe Figur 9).

**Bezugszeichenliste**

1 Oberfläche

2 Austrittsöffnung

3 unebenheitselement

4 Hinterkante

5 Druckseite

6 Kanal

7 Turbulator

8 Saugseite

9 Brennkammerschindel

10 Heißgas

11 Kühlfilm

12 Kühlluft

**Patentansprüche**

1. Kühlbares Bauteil, umfassend eine zu kühlende Oberfläche (1), der mindestens eine Austrittsöffnung (2) für ein Kühlmedium zugeordnet ist, das nach Austritt aus der Austrittsöffnung (2) zur Ausbildung eines Kühlfilms auf der Oberfläche (1) vorgesehen ist, wobei in Hauptströmungsrichtung des Kühlmediums gesehen nach der Austrittsöffnung (2) auf der Oberfläche (1) Unebenheitselemente (3) angeordnet sind,
   **dadurch gekennzeichnet,**
   **dass** die Unebenheitselemente (3) auf der zu kühlenden Oberfläche (1) zur Erhöhung des turbulenten Queraustausches im wandnahen Bereich des Kühlfilms mehrreihig ausgebildet sind.

2. Kühlbares Bauteil nach Anspruch 1,
   **dadurch gekennzeichnet,**
   **dass** die Oberfläche (1) als Teil einer Gasturbinenechaufel, insbesondere als eine Hinterkante (4) einer Gasturbinenschaufel, ausgebildet ist.

3. Kühlbares Bauteil nach Anspruch 2,

**dadurch gekennzeichnet,**

**dass** die Hinterkante (4) der Gasturbinenschaufel druckseitig verkürzt ausgebildet ist, wobei die Unebenheitselemente (3) auf einer einer Druckseite (5) der Gasturbinenschaufel zugewandten, unverkürzten Seite der Hinterkante (4) angeordnet sind.

4. Kühlbaree Bauteil nach Anspruch 2 oder 3,
   **dadurch gekennzeichnet,**
   **dass** in Hauptströmungsrichtung des Kühlmediums gesehen vor der Austrittsöffnung (2) in einem Kanal (6) im Innern der Gasturbinenschaufel Turbulatoren (7) für das Kühlmedium angeordnet sind.

5. Kühlbares Bauteil nach einem der Ansprüche 2 bis 4,
   **dadurch gekennzeichnet,**
   **dass** die Austrittsöffnung (2) zwischen einer Druck- (5) und einer Saugseite (8) der Hinterkante (4) der Gasturbinenschaufel angeordnet ist.

6. Kühlbares Bauteil nach Anspruch 1,
   **dadurch gekennzeichnet,**
   **dass** die Oberfläche (1) Teil eines sich im Heißgaspfad einer Gasturbine befindlichen Bauteils, insbesondere als Teil einer Brennkammerschindel (9) oder einer Druckseite einer Gasturbinenschaufel ausgebildet ist.

7. Kühlbares Bauteil nach einem der Ansprüche 1 bis 6,
   **dadurch gekennzeichnet,**
   **dass** eine Hauptquerschnittsebene der Austrittsöffnung (2) senkrecht zur Oberfläche (1) angeordnet ist.

8. Kühlbares Bauteil nach einem der Ansprüche 1 bis 7,
   **dadurch gekennzeichnet,**
   **dass** eine Höhe des Kühlfilms durch eine Höhe der Austrittsöffnung (2) definiert ausgebildet ist.

9. Kühlbares Bauteil nach einem der Ansprüche 1 bis 8,
   **dadurch gekennzeichnet,**
   **dass** die Uhebenheitselemente (3) eine Höhe aufweisen, die maximal 50%, vorzugsweise 2 bis 5%, einer Höhe des Kühlfilms entspricht.

10. Kühlbares Bauteil nach einem der Ansprüche 1 bis 9,
    **dadurch gekennzeichnet,**
    **dass** die Unebenheitselemente (3) wahlweise in Form von vorzugsweise quer zur Hauptströmungsrichtung des Kühlmediums orientierten Rippen, als erhabene Elemente oder als Ausbuchtungen ausgebildet sind.

11. Kühlbares Bauteil nach einem der Ansprüche 1 bis 10,
    **dadurch gekennzeichnet,**
    **dass** die vorzugsweise durch Sandstrahlen, Glasperlenstrahlen oder dergleichen erzeugten Unebenheitselemente (3) stochastisch verteilt angeordnet sind.

12. Kühlbares Bauteil nach einem der Ansprüche 1 bis 11,
    **dadurch gekennzeichnet,**
    **dass** die Oberfläche (1) eine höhere Temperatur als der Kühlfilm aufweist.

Figur 1

Stand der Technik

Figur 2

Stand der Technik
mit Unebenheitselementen

Figur 3

Figur 4

Stand der Technik (Quelle: Rolls-Royce)

Figur 5

Figur 6

Figur 7

Quelle: Rolls-Royce

Figur 8

Figur 9

Europäisches
Patentamt

European
Patent Office

Office européen
des brevets

## EUROPÄISCHER RECHERCHENBERICHT

**Nummer der Anmeldung**

EP 11 00 1390

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 715 139 A2 (UNITED TECHNOLOGIES CORP [US]) 25. Oktober 2006 (2006-10-25)<br>* das ganze Dokument *<br>* Absätze [0006], [0007], [0029], [0030], [0033], [0034], [0037] *<br>* Abbildungen 4,5C,6 *<br>----- | 1-12 | INV.<br>F01D5/18 |
| X | US 2010/074763 A1 (LIANG GEORGE [US]) 25. März 2010 (2010-03-25)<br>* das ganze Dokument *<br>* Absätze [0008], [0020] - [0023], [0030] *<br>* Abbildungen 2,3 *<br>----- | 1-12 | |
| X | DE 10 2008 037385 A1 (GEN ELECTRIC [US]) 2. April 2009 (2009-04-02)<br>* das ganze Dokument *<br>* Absätze [0020], [0024], [0025] *<br>* Abbildungen 2,5,7 *<br>----- | 1,6,9, 10,12 | |
| X | EP 1 983 265 A2 (ROLLS ROYCE DEUTSCHLAND [DE]) 22. Oktober 2008 (2008-10-22)<br>* das ganze Dokument *<br>* Absätze [0022] - [0025] *<br>* Abbildungen 3-7 *<br>----- | 1,6-12 | **RECHERCHIERTE SACHGEBIETE (IPC)**<br><br>F01D<br>F02K<br>F02C<br>F23R |
| X | EP 1 961 917 A2 (UNITED TECHNOLOGIES CORP [US]) 27. August 2008 (2008-08-27)<br>* das ganze Dokument *<br>* Absätze [0008] - [0011], [0015] *<br>* Abbildungen 1B,2A-2C *<br>----- | 1-3, 5-10,12 | F23M |
| X | US 5 598 697 A (AMBROGI CHRISTINE J M [FR] ET AL) 4. Februar 1997 (1997-02-04)<br>* das ganze Dokument *<br>* Spalte 3, Zeilen 5-61 *<br>* Abbildung 3 *<br>-----<br><br>-/-- | 1,6,9-12 | |

Der vorliegende Recherchenbericht wurde für alle Patentansprüche erstellt

| Recherchenort | Abschlußdatum der Recherche | Prüfer |
|---|---|---|
| Den Haag | 18. Juli 2011 | Gombert, Ralf |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes
    Dokument

EPO FORM 1503 03.82 (P04C03)

EP 2 489 836 A1

**Europäisches Patentamt**
**European Patent Office**
**Office européen des brevets**

# EUROPÄISCHER RECHERCHENBERICHT

Nummer der Anmeldung

EP 11 00 1390

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 2 193 859 A1 (UNITED TECHNOLOGIES CORP [US]) 9. Juni 2010 (2010-06-09) * das ganze Dokument * * Abbildungen 8,11 * ----- | 1-12 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 18. Juli 2011 | Gombert, Ralf |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 11 00 1390

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-07-2011

| Im Recherchenbericht angeführtes Patentdokument | Datum der Veröffentlichung | Mitglied(er) der Patentfamilie | Datum der Veröffentlichung |
|---|---|---|---|
| EP 1715139 A2 | 25-10-2006 | CN 1851239 A<br>JP 2006300056 A<br>KR 20060111373 A<br>SG 126818 A1<br>US 2006239819 A1 | 25-10-2006<br>02-11-2006<br>27-10-2006<br>29-11-2006<br>26-10-2006 |
| US 2010074763 A1 | 25-03-2010 | KEINE | |
| DE 102008037385 A1 | 02-04-2009 | CH 697920 A2<br>CN 101514658 A<br>JP 2009085222 A<br>US 2009120093 A1 | 31-03-2009<br>26-08-2009<br>23-04-2009<br>14-05-2009 |
| EP 1983265 A2 | 22-10-2008 | DE 102007018061 A1<br>US 2008264065 A1 | 23-10-2008<br>30-10-2008 |
| EP 1961917 A2 | 27-08-2008 | US 2008199317 A1 | 21-08-2008 |
| US 5598697 A | 04-02-1997 | DE 69505067 D1<br>DE 69505067 T2<br>EP 0694739 A1<br>FR 2723177 A1 | 05-11-1998<br>08-04-1999<br>31-01-1996<br>02-02-1996 |
| EP 2193859 A1 | 09-06-2010 | US 2010129195 A1 | 27-05-2010 |

EPO FORM P0461

Für nähere Einzelheiten zu diesem Anhang : siehe Amtsblatt des Europäischen Patentamts, Nr.12/82

**EP 2 489 836 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009003634 A1
- DE 3200972 A1
- DE 19737845 C2
- DE 10143153 A1
- DE 10248548 A1
- WO 2009150019 A1
- US 4297077 A
- EP 0185599 A1
- EP 1057971 A1
- US 6514042 B2